# EUROPÄISCHE PATENTSCHRIFT

(11) **EP 1 883 802 B1**
(45) Veröffentlichungstag und Bekanntmachung des Hinweises auf die Patenterteilung: **16.05.2012**
(21) Anmeldenummer: 06776029.8
(22) Anmeldetag: 06.05.2006
(51) Int. Cl.: G01N 15/14

(54) **ADAPTIVE SIGNALINTERPRETATION FÜR FBRM-MESSGERÄTE**
ADAPTIVE SIGNAL INTERPRETATION FOR FBRM MEASUREMENT APPARATUS
INTERPRETATION ADAPTATIVE DE SIGNAUX POUR APPAREILS DE MESURE FBRM

(30) Priorität: 06.05.2005 DE 102005021179
(43) Veröffentlichungstag der Anmeldung: 06.02.2008
(73) Patentinhaber: Schwartz, Friedel Herbert, 40489 Düsseldorf (DE); Schwartz, Margit, 40489 Düsseldorf (DE)
(72) Erfinder: LENZING, Markus, 59348 Lüdinghausen (DE)
(74) Vertreter: Lenzing Gerber Stute
(86) Internationale Anmeldenummer: PCT/EP2006/004262
(87) Internationale Veröffentlichungsnummer: WO 2006/131181

(56) Entgegenhaltungen:
- EP-A- 0 289 200
- WO-A-92/08120
- AU-B2- 658 669
- US-A- 5 627 642
- US-A1- 2004 011 975

## Beschreibung

Das vorgestellte Verfahren betrifft die Auswertung des Sensorsignals von FBRM-Messgeräten. FBRM-Messgeräte dienen der optischen Analyse von Partikeln in homogenen Medien. Sie liefern Informationen über Eigenschaften des Partikelsystems wie
1. Partikelgrößenverteilung
2. Konzentration
3. Anzahl
4. Formklassen
und andere.

Das Verfahren ermöglicht eine verbesserte Auswertung für FBRM-Messgeräte mit Single-Mode-Lichtwellenleitern in der Sensoroptik. Dabei wird eine adaptive Anpassung an das Messsignal verwendet, um eine optimale Auswertung des Signals zu erreichen.

### Funktionsprinzip eines FBRM-Messgerätes

Das Messgerät dient der Analyse von Partikeln in einem Medium. Für diese Analyse werden die Partikel mit einem fokussierten Lichtstrahl abgetastet. Das Abtasten umfasst ein Beleuchten des Messgutes und das Auffangen des reflektierten Lichtes. Der Zeitverlauf der Intensität des reflektierten Lichtes wird erfasst und verarbeitet. Dazu ist es erforderlich, dass sich der Brennpunkt der Linse und der Partikel relativ zu einander bewegen. Dem Zeitverlauf der Intensität kann eine räumliche Bewegung des Laserfokuspunktes über den Partikel zugeordnet werden, wenn sich Fokus und Partikel relativ zu einander mit einer bekannten Geschwindigkeit bewegen. Wenn die Partikel mit einem Medium strömen, gibt es zwei Möglichkeiten, zu einer bekannten Relativgeschwindigkeit zu gelangen:
1. Die Strömungsgeschwindigkeit ist bekannt und der Brennpunkt ist näherungsweise ortsfest¹. In diesem Fall ist die Relativgeschwindigkeit die Strömungsgeschwindigkeit.
2. Die Strömungsgeschwindigkeit ist unbekannt. Der Brennpunkt muss dann mit einer größeren Geschwindigkeit bewegt werden. Die Relativgeschwindigkeit ist dann näherungsweise die Geschwindigkeit des Brennpunktes.
¹ Auf einer geeigneten Zeitskala

Im zweiten Fall addieren sich die Geschwindigkeitsvektoren von Partikel- und Brennpunktbewegung. Dieser Effekt beeinträchtigt die Bestimmung von Partikelgrößen und muss ggf. mathematisch berücksichtigt oder kompensiert werden.

Bei verschiedenen Geräten wird die Bewegung des Brennpunktes durch eine Rotations- oder Translationsbewegung der Optik erreicht. Solche Konstruktionen, bei denen sich der Brennpunkt periodisch auf linearen, Kreis- oder Ellipsenbahnen bewegt, werden als *Scanner* bezeichnet, die Frequenz, mit der die periodische Bewegung erfolgt, entsprechend als *Scannerfrequenz.*

Die optischen Einrichtungen sind häufig räumlich getrennt von den Signalauswertungvorrichtungen in einem Sensor untergebracht.

### Schematischer Aufbau eines gattungsmäßigen FBRM-Messgerätes

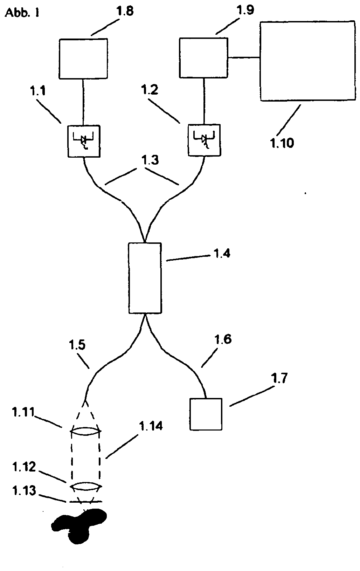

In Abbildung 1 ist schematisch der Aufbau eines typischen faseroptischen Messgerätes dargestellt, das auf Basis des FBRM-Verfahrens arbeitet. Es umfasst üblicherweise neben der Energieversorgung eine Lichtquelle 1.1 in Form eines Lasers mit elektronischer Steuerung 1.8, einen Lichtdetektor 1.2 mit Messverstärker 1.9, eine Auswertungseinheit 1.10, Lichtwellenleiter 1.3 zur Verbindung von Lichtquelle und Detektor mit dem faseroptischen Koppler 1.4, einen Lichtwellenleiter 1.5 zur Optik und ggf. ein nichtverwendetes Ende 1.6 des Kopplers 1.4, das an einem optischen Sumpf² 1.7 endet.
² Der optische Sumpf stellt sicher, dass keine Reflexionen vom offenen Ende des Lichtwellenleiters zurück in das System gelangen.

Als Lichtquelle wird eine Laserdiode verwendet. Die Laserdiode besteht aus der eigentlichen Laserquelle und einer Photodiode, die als Monitordiode bezeichnet wird. Die Monitordiode liefert in Verbindung mit einer geeigneter elektronischen Schaltung ein Signal, das proportional zu der Lichtleistung ist, die vom Laser erzeugt wird. Dieses Signal wird benutzt, um die Lichtleistung der Laserquelle konstant zu halten. Dieses ist erforderlich, damit Schwankungen der Lichtleistung der Laserquelle nicht zu einer Verfälschung des Signals des Lichtdetektors führen. Diese Verfälschung entsteht, da durch die optischen Elemente oder diffus reflektierende Messgüter ein konstanter³ Lichteinfall auf den Lichtdetektor verursacht wird. Modulationen dieses konstanten Anteils überlagern ggf. den nutzbaren Anteil der reflektierten Lichtleistung. Die Laserdiode wird über eine geeignete Kopplungsoptik an einen Lichtwellenleiter angebunden. Es wird in dem vorliegenden Gerät ein Single-Mode-Lichtwellenleiter verwendet.
³ Bezogen auf die Zeitdauer eines zu verarbeitenden Einzelsignals

Am Ende des Lichtwellenleiters 1.5 tritt der Strahl als divergentes Bündel mit einem Öffnungswinkel entsprechend der numerischen Apertur des Lichtwellenleiters wieder aus. Bei Verwendung eines Single-Mode-Lichtwellenleiters kann durch eine geeignete Optik ein sehr gut kollimierter Strahl 1.14 mit homogenen Wellenfronten hergestellt werden. Diese Art des Strahls ist optimal für die Erreichung eines möglichst kleinen Brennpunktes geeignet. Dadurch erreicht das Messgerät ein sehr gutes räumliches Auflösungsvermögen. Die Auflösung liegt in der Größenordnung der Wellenlänge des verwendeten Lasers. Die zur Fokussierung erforderliche Optik ist durch die Linse 1.12 angedeutet. Die Optik im Sensor wird durch ein Fenster 1.13 vom Medium mit den zu messenden Partikeln abgetrennt.

Der kollimierte Laserstrahl ist interferenzfähig. Es kann also bei entsprechenden geometrischen Verhältnissen zwischen Messgut und Optik zur ganzen oder teilweisen Auslöschung des reflektierten Lichts kommen. Dieser Umstand erschwert die Signalauswertung.

Das vom Messgut reflektierte Licht wird infolge der Umkehrbarkeit des Lichtweges wieder in den Lichtwellenleiter 1.5 eingekoppelt. Die Fokussierungsoptik bildet einen kleinen Raumbereich um die Fokuszone auf die Stirnfläche des Lichtwellenleiters ab.

Licht, das innerhalb dieses Raumbereiches reflektiert wird, wird entsprechend in den Lichtwellenleiter eingekoppelt und läuft zurück zum faseroptischen Koppler.

Häufig wird nur ein sehr kleiner Bruchteil der Laserleistung wieder von der Faser empfangen. Die Dämpfung der reflektierten Lichtleistung entsteht durch Absorbtion und Streuung im Medium vor der Optik, Absorbtion am Messgut selbst, Reflexion an der Optik und andere Prozesse.

FBRM-Geräte, die mit einem Multimode-Wellenleiter ausgestattet sind, fangen wesentlich mehr reflektiertes Licht auf, da der Kerndurchmesser eines solchen Wellenleiters wesentlich größer ist. Die von der Anmelderin benutzten Single-Mode-Fasern haben einen Kerndurchmesser von 5µm. Übliche Multi-Mode-Fasern haben einen Kerndurchmesser von 50µm. Entsprechend ist die Stirnfläche des Multi-Mode-Lichtwellenleiters 100mal größer.

Daher ergibt sich bei dem hier verwendeten Single-Mode-Gerät die Notwendigkeit, ausreichende Laserleistung und sehr empfindliche Detektoren zu verwenden.

Als Detektor wird eine Lawinendiode (APD, avalanche pin diode) eingesetzt. Diese Diode wird mit einer geeigneten Vorspannung in Sperrrichtung betrieben. Durch die Vorspannung kann die Eigenverstärkung der Diode genutzt werden.

Die Anbindung des Lichtwellenleiters an die Lawinendiode erfolgt wiederum durch eine geeignete Optik.

Das Signal des Detektors wird mit einem Verstärker aufbereitet und der nachfolgenden Verarbeitung zugeführt.

### Auswertung nach dem Stand

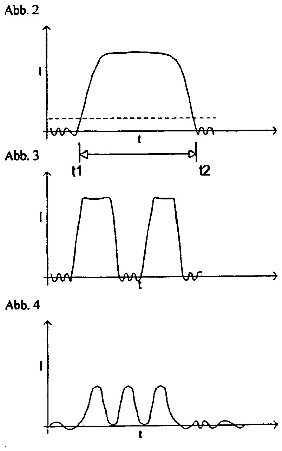

Nach dem Stand der Technik wird für die Bestimmung von Partikelgrößen die Zeitdauer herangezogen, in der das Detektorsignal eine bestimmte Schwelle überschreitet ^{.}4 Dabei wird bei Geräten mit Multi-Mode-Fasern zusätzlich die Flankensteilheit der Impulse gemessen, die von Partikeln verursacht werden. Impulse, die eine bestimmte Mindestflankensteilheit nicht erreichen, werden verworfen. Diese Selektion liegt darin begründet, dass die Flankensteilheit umso größer wird, je näher am geometrischen Brennpunkt der Optik ein Partikel die Fokuszone passiert. Dadurch erreicht man für Multi-Mode-Fasern eine verbesserte räumliche Auflösung des Gerätes. In Abb. 2 ist ein typischer Signalverlauf eines Detektors dargestellt, der an eine Multi-Mode-Empfangsfaser angekoppelt ist.
⁴ Vgl. US-Patent 4,871,251

Aus der Patentschrift US5627642 ist ein Verfahren zur kontinuierlichen dynamischen Echtzeit-Auswertung des Signals eines Partikelsensors zur Grössenbestimmung von Partikeln bekannt, die der Brown'schen Bewegung unterworfen sind, wobei eine digitale Auswertung erfolgt und z.B. die Integrations- und Sample-Zeiten der Photonenzählung variiert werden können und die Ergebnisse mit Simulationsergebnissen verglichen werden. Die einfallende Laserstrahlung wird mittels einer optischen Mono-Faser übertragen und auf das Streumedium fokussiert, die gestreute bzw. reflektierte Laserstrahlung wird mittels einer zweiten optischen Faser an den Detektor übertragen.

Eine genauere Analyse kann nunmehr durch die Verwendung von Single-Mode-Lichtwellenleitern und die darauf aufbauende, hier dargestellte Erfindung erreicht werden.

### Technische Problemstellung bei Verwendung von Single-Mode-Fasern

Im vorliegenden Gerät wird eine digitale Auswertung eingesetzt. Das Frequenzspektrum des Signales wird dazu zunächst durch einen Bandpass begrenzt. Neben einer Reduktion des Rauschens im Signal wird dadurch eine definierte Bandbreite erzielt, die für die Auswertung des Signals und die Kalibrierung des Gerätes erforderlich ist.

Das Signal wird danach mittels eines Wandlers in einen digitalen Datenstrom umgesetzt. Dieser Datenstrom wird dann mittels eines Hardwarebausteins weiterverarbeitet. Am Ende der Verarbeitung stehen die gewünschten Informationen, wie die Größenverteilung und Anzahl der Partikel, die die Fokuszone passiert haben, zur Verfügung⁵.
⁵ Sofern das Gerät innerhalb seiner Spezifikationen betrieben wird.

Wie oben erläutert ergeben sich bei der Verwendung von Single-Mode-Fasern in der Sensoroptik bestimmte Eigenschaften des Sensors. Diese Eigenschaften bieten Vorteile, werfen andererseits aber Probleme für die Auswertung des Detektorsignals auf.

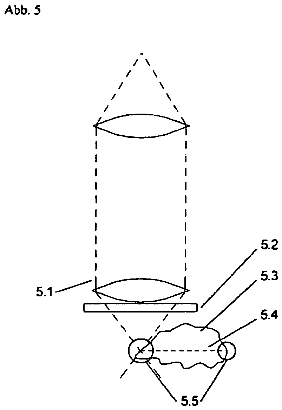

Diese sind im Einzelnen:
1. Hohe räumliche Auflösung
   Bei einer Wellenlänge von 780nm kann eine Fokuszone mit einem minimalen Durchmesser von etwa 1 µm erreicht werden. Dieses bietet den Vorteil, kleine Partikel von wenigen µm Durchmesser, wie sie z.B. in einigen Emulsionen vorliegen, noch optisch auflösen zu können. Andererseits zerfällt das Detektorsignal für Partikel, die größer als ca. 10µm sind, häufig in einzelne Peaks (Abb. 11). Die Ursache hiefür liegt darin, dass geometrische Oberflächeneigenschaften der Partikel erfasst werden, während die Fokuszone den Partikel überquert. Dabei kann die Intensität des zurückgestreuten Lichtes durch Brechung oder Streuung mehrfach stark zurückgehen. Ein solches Signal, das in zwei Bereiche zerfallen ist, ist in Abb. 3 dargestellt.
   Dieses Problem wird zudem dadurch erheblich verschärft, dass größere Partikel aus geometrischen Gründen *größtenteils außerhalb* der eigentlichen Fokuszone liegen, wie in Abb. 5 dargestellt. Der Strahl 5.1 durchtritt das Fenster 5.2 und trifft auf den Partikel 5.3. Durch die Bewegung des Strahles relativ zum Partikel beschreibt die Fokuszone die gedachte Bahn 5.4. Nur wenn die Oberfläche des Partikels wirklich die Fokuszone schneidet -wie in den Bereichen 5.5- entsteht eine für eine Erkennung ausreichende Rückstreuung.
2. Interferenzfähigkeit des Beleuchtungsstrahles
   Eine ebene, gut reflektierende Partikeloberfläche lässt eigentlich eine Signalform des Detektorsignals erwarten, dem leicht eine Dauer bzw. Länge zugeordnet werden kann. Für bestimmte Abstände zwischen Sensoroptik und Partikeloberfläche tritt jedoch durch Interferenz eine Auslöschung des Signals auf.
   Entsprechend der geometrischen Optik erscheint z. B. beim Durchtritt eines ebenen Kristalls durch die Fokuszone eine Folge ähnlicher Peaks im Detektorsignal, da sich der Abstand zwischen Oberfläche und Detektoroptik kontinuerlich verändert und dadurch die Interferenzbedingung periodisch erfüllt und wieder nicht erfüllt ist⁶. Dadurch scheint das Partikelsignal wiederum in einzelne Peaks zu zerfallen. Aufgrund der Interferenzbedingung verläuft die
   Intensität in einem solchen Fall näherungsweise sinusförmig. Ein solches Signal ist in Abb. 4 dargestellt. Nach den Beobachtungen des Erfinders kann es durch den Gradienten der Strömungsgeschwindigkeit in der Nähe des Fensters zu einer Ausrichtung flächiger Partikel parallel zum Fenster kommen, die solche Signalformen gehäuft entstehen lassen.
   ⁶ Im Fall der flächigen Betrachtung bekannt als *Newtonsche Ringe.*
3. Geringe Lichtleistung am Detektor
   Da die von dem Single-Mode-Lichtwellenleiter aufgefangen Lichtleistungen wesentlich kleiner als bei den größeren Multi-Mode-Lichtwellenleitern sind, ist es erforderlich, auch die Partikelsignale zu erkennen, die sich kaum vom Rauschen unterscheiden.
   Es erscheint daher wünschenswert, für größere Partikel die Empfindlichkeit des Detektors zu erhöhen.

### Lösung der Probleme

### Verarbeitungsstufen

Die Verarbeitung des Detektorsignals erfolgt gemäß Anspruch 1 im vorliegenden Gerät in mehreren Stufen, die im folgenden beschrieben werden. In den einzelnen Stufen werden Maßnahmen getroffen, um die angeführten Probleme ganz oder teilweise zu kompensieren.

Die Schwellwertstufe 8.5 verarbeitet das Detektorsignal vom Detektor 8.1, den Ausgangszustand der Detektorstufe 8.4, einen äußeren Parameter R für den Rauschabstand und einem weiteren Parameter H für die Hysterese.
Das Detektorsignal wird zunächst mit einem Tiefpass gefiltert. Die Grenzfrequenz des Tiefpassfilters wird so gewählt, dass Schwankungen des Detektorsignals, die durch die Scannerbewegung im Sensor verursacht werden, noch mit einer geringen Dämpfung passieren können. Dadurch wird erreicht, dass Änderungen des Reflexionshintergrundes während einer Scanneroszillation in den nachfolgenden Stufen ausgeregelt werden und nicht in die Messung eingehen. Diese Auslegung wird erfüllt, wenn die -3dB-Grenzfrequenz des Filters der Scannerfrequenz entspricht.

Ist der Ausgangszustand der Detektorstufe logisch Eins, dann gibt die Schwellwertstufe M + R - H aus, andernfalls den Wert M + R + H.

Durch dieses Konzept wird die Berücksichtigung
1. einer Hysterese für den Detektionsprozess realisiert und
2. eine Adaption an schwankende Reflexionshintergründe erreicht.

Parallel zur Schwellwertstufe parallel arbeitet die *Detektorstufe 8.4.* Die Ausgangsgröße S der Schwellwertstufe ist ein Eingangsparameter der Detektorstufe. Ein weiterer Eingangsparameter ist der Detektorstufe ist die Integrationszeitkonstante T. Dieser Parameter wird von der übergeordneten Softwaresteuerung eingestellt oder ist fest vorgegeben.

In der Abbildung 4 ist exemplarisch ein Ausschnitt des Detektorsignals dargestellt. Der Ausschnitt zeigt den Durchtritt eines Partikels durch die Fokuszone der Sensoroptik.

Zu jedem Zeitpunkt **t** berechnet die Detektorstufe zunächst das Integral I über das Detektorsignal im Zeitraum t-T bis t. Im diskreten Zahlenraum eines digitalisierten Signals wird das Integral als *Summe* realisiert. Der Parameter T wird in Sample-Zeiten⁷ angegeben. Der Wert des Integrals wird dann mit dem Schwellwert S verglichen. Steigt der Wert über oder ist er gleich S, dann gibt die Detektorstufe eine logische Eins aus; fällt der Wert I unter S, dann wird entsprechend eine logische Null ausgegeben.
⁷ Zeitdauer zwischen zwei Digitialisierungen

Das Ausgangssignal wird so interpretiert, dass bei einer logischen Eins am Ausgang der Detektorstufe im Zeitraum t-T bis t ein Partikel in der Fokuszone des Sensors erkannt wurde.

Die Größenbestimmungsstufe 8.8 ist ein Zustandsautomat, der die Signale am Ausgang der Detektorstufe in logische Gruppen unterteilt. Ihre Aufgabe ist es zu erkennen, welche logischen Einsen am Ausgang der Detektorstufe zusammen zu fassen sind, da sie wahrscheinlich zu einem Partikelsignal gehören, und welche im Gegensatz dazu zu trennen sind, da sie von verschiedenen Partikeln stammen.

Diese Interpretation basiert auf der Beobachtung, dass die Zeitintervalle, in denen kein Partikel erkannt wird, im Mittel wesentlich länger sind als die Zeitintervalle, I in denen ein Partikel die Fokuszone durchquert.

Das Ergebnis der Größenbestimmung ist eine Sekantenlänge. Die Umrechnung zu Partikelgrößen erfolgt durch eine entsprechende mathematische Transformation, für die jedoch weiterführende Informationen -wie z.B. die zu erwartende Partikelformverteilung- erforderlich sind. Diese Transformation erfolgt durch die übergeordneten Softwareschichten im Gerät oder einem Computer.

Der Mittelwert des Detektorausgangssignales ist ein Maß für die mittlere Erkennungswahrscheinlichkeit P. Der Mittelwert kann berechnet werden als die Anzahl der logischen Einsen n in einem Zeitintervall dividiert durch die Gesamtzahl N der logischen Nullen und Einsen, die in dem Zeitintervall insgesamt ausgegeben⁸ wurden, also P=n/N.
⁸ Die Detektorstufe gibt pro Verarbeitungszeitschritt eine logische Null oder eine logische Eins aus.

Mit steigender Konzentration der Partikel im Medium, das den Sensor passiert, steigt auch P an. Nur für sehr hohe Konzentrationen, wie sie z.B. in Emulsionen vorliegen, erreicht P etwa den Wert 0.5. Für die Mehrzahl aller Anwendungen ist P erfahrungsgemäß kleiner als 0.1.

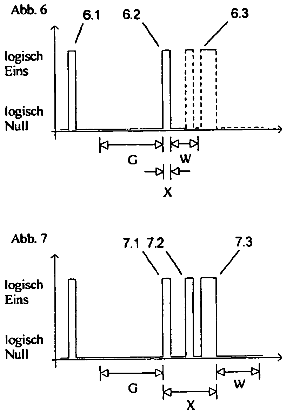

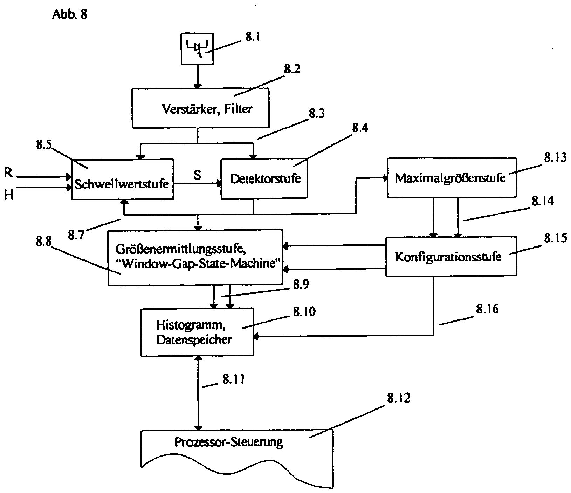

Ein typisches Eingangssignal für die Größenbestimmungsstufe 8.8 ist in Abb. 6 dargestellt.

Alle logischen Einsen, die innerhalb eines Intervalls der Dauer W⁹ auftreten, werden dem gleichen Partikelsignal zugeordnet. Das Intervall W wird ab der letzten logischen Eins am Ausgang der Detektorstufe gemessen. Zu Beginn eines neuen Partikelsignales wird W mit dem Wert Wmin intialisiert. Das Intervall W wird danach während er Erkennung eines Partikels um einen festen Bruchteil der bisher erkannten Pulsbreite (im Beispiel 6.2) erweitert. Dadurch wird die Erkennung großer Partikel wesentlich verbessert. W wird dabei auf einen Wert W ≤ Wmax begrenzt.
⁹ W wie "*window*"

Die Begrenzung auf W ≤ Wmax verhindert, dass die Erkennung des momentan erkannten Partikels bis auf das nächste folgende Partikelsignal ausgedehnt wird. Die Parameter Wmin, Wmax und G müssen für die zu messende Substanz passend gewählt werden. Dazu kann eine *Applikationsdatenbank* verwendet, in der für verschiedene Anwendungen, Substanzen und Fluide entsprechende Werte für Wmin, Wmax und G vermerkt sind. Alternativ kann eine automatische Parameterfindung verwendet werden. Diese ist im nächsten Kapitel beschrieben.

Ein Eintrag in einer solchen Applikationsdatenbank kann wie folgt gestaltet sein:
"Emulsionen" Wmin=5, Wmax=7, G=10, T=20, 0.01<P<0.05, Pmax=0.07

Die Auswahl des anzuwendenden Eintrags aus der Applikationsdatenbank erfolgt durch den Benutzer. Es ist dabei jedoch möglich, dass die Prozessorsteuerung 8.12 automatisch zwischen zwei oder mehreren Einträgen der Applikationsdatenbank umschaltet. Diese Umschaltung erfolgt in Abhängigkeit vom Parameter P. Diese Umschaltung ermöglicht eine Anpassung des Systems an Veränderungen des Messgutes. Dieses kann beispielsweise nützlich sein, wenn während eines chemischen Prozesses die Konzentration durch Zugabe weiterer Substanzen wesentlich ansteigt.

### Beispiel für die Verarbeitung eines Datenstromausschnitts

Die Abb. 6 zeigt einen Ausschnitt aus einem typischen Eingangssignal am Eingang der Größenbestimmungsstufe. Das Beispiel geht davon aus, dass der Zustandsautomat gerade aktiviert worden ist und den Datenstrom zu verarbeiten beginnt. Zunächst wartet er auf eine Nullsequenz der Mindestdauer G. Dabei wird jedoch zunächst der Impuls 6.1 gefunden. Vor dem Impuls 6.2 liegt eine hinreichend lange Nullsequenz, so dass der Automat den Zustand wechselt und mit der Verarbeitung der folgenden Impulse fortfährt. Als Anfang des Partikelsignals ist der Anfang des ersten erkannten Impulses definiert; im Beispiel also die linke Flanke des Impulses 6.2. Nach dem Impuls 6.2 wechselt das Signal von logisch Eins auf logisch Null. Der Zustandsautomat wechselt den Zustand und beginnt innerhalb eines Intervalls der Dauer W auf weitere logische Einsen zu warten. Der Parameter W ist in diesem Zustand auf den Anfangswert Wmin eingestellt. Die Dauer X zeigt die bis dahin erkannte Impulsdauer für das Gesamtsignal an.

In Abb. 7 ist die Verarbeitung im Vergleich zu Abb. 6 weiter fortgeschritten. Der Zustandsautomat hat die Nullsequenz nach dem Impuls 7.1 verarbeitet und weitere Impulse 7.2 und 7.3 gefunden. Entsprechend ist das Fenster W für weitere Impulse, die zu einem Partikelsignal gruppiert werden, weitergeschoben worden. Das Fenster W ist dabei um die bereits erkannte Dauer X erweitert und auf einen Maximalwert Wmax begrenzt worden. Die erkannte Gesamtdauer X ist vergrößert worden. Folgen innerhalb des gezeigten Fensters W keine weiteren Impulse, dann ist die Erkennung der Impulsgruppe abgeschlossen und der Zustandsautomat übergibt den Wert von X an die nachfolgende Stufe 8.10. Danach kehrt der Automat in seinen Ausgangszustand zurück.

Der Wert von X wird interpretiert als eine Sekantenlänge.

Zusammenfassend wird der Vorgang im folgenden beschrieben.

### Ablauf der Zustandsmaschine

1. Warte auf eine Sequenz von logischen Nullen der Länge G oder größer.¹⁰
   ¹⁰ Wird eine solche Sequenz nicht innerhalb hinreichend kurzer Zeit gefunden, obwohl logische Einsen im Datenstrom auftauchen, dann ist der Parameter G in ungeeigneter Weise für die vorliegende Konzentration gewählt worden. (Fehlerzustand).
2. Warte auf eine logische Eins
3. Erhöhe die Sekantenlänge X, solange weiterhin eine logische Eins am Ausgang der Detektorstufe anliegt. Gehe zum nächsten Schritt, wenn eine Null auftritt.
4. Messe die Länge der Sequenz der Nullen
5. Wenn die Länge der gefundenen Sequenz von Nullen größer als der Parameter W ist, dann gehe zu 7.
6. Addiere die gefundene Länge der Sequenz von Nullen auf die bisher bestimmte Sekantenlänge X
7. Erhöhe W um einen Bruchteil von X und begrenze W auf Wmax.
8. Gehe zu 3
9. Übergebe die ermittelte Sekantenlänge X an das Histogramm 8.10.
10.Stelle den Parameter W auf die Vorgabewerte zurück und gehe zu 1.

Die Anpassung liegt in der Erfahrungstatsache begründet, dass größere Partikel¹¹ an den beiden Außenflanken (vgl. Abb. 5) eine messbare Reflexion verursachen, dazwischen jedoch keine ausreichende Rückreflexion stattfindet. Die dynamische Anpassung des Parameters W ist daher eine Maßnahme, um die Messung unempfindlich gegen die bei größeren Partikeln häufig auftretenden Signalpausen zu machen.
¹¹ Typischerweise über 20µm Durchmesser

Wenn W größer wird, kann auch T linear oder in Stufen erhöht werden. Damit wird die effektive Rauschbandbreite der Eingangsstufe verringert und dadurch das Signal-zu-Rauschverhältnis (SNR) verbessert. Dieses führt ebenfalls zu einer verbesserten Erkennung großer Partikel.

### Automatische Parameterfindung

Selbstverständlich ist es besonders nützlich, die erforderlichen Parameter G, Wmin, Wmax mittels eines Verfahrens aus dem Eingangssignal (vgl. Abb. 6, Abb. 7) bestimmen zu können.

Das Verfahren der Parameterfindung besteht aus zwei Teilen. Der erste Teil bestimmt anhand eines statistischen Verfahrens aus dem Eingangssignal die Parameter G, Wmin und Wmax. Der zweite Teil bestimmt ein mathematisches Maß für die Verlässlichkeit der ermittelten Parameter. Dieses Maß wird bezeichnet als *Stabilitätskriterium* oder kurz *Stabilität Y* und kann benutzt werden, um die aufgenommen Messdaten im Histogramm 8.10 für gültig oder ungültig zu erklären. Die durch einen Erfassungsvorgang ermittelten Daten im Histogramm 8.10 können z.B. dann für gültig erklärt werden, wenn die automatische Parameterfindung die Erkennungsparameter Wmin, Wmax oder G während des Erfassungsvorganges nicht wesentlich verändert hat.

### Analyse des Eingangssignales

Je größer die Ausdehung eines Partikel ist, desto größer ist die zeitliche Dauer des von dem Partikel verursachten Reflexionssignales. Dieses ideale Signal zerfällt jedoch -wie Eingangs erläutert- durch Interferenz, Streuung usw. häufig in verschiedene Teile. Man kann beobachten, dass die maximale Dauer eines solchen Teilimpulses, wie z.B. in Abb. 7.3, mit zunehmender Größe ebenfalls zunimmt. Dieses liegt darin begründet, dass die eingangs genannten Effekte (vgl. Punkt 1 und 2 unter Technische Problemstellung) ein Zerfallen des Eingangssignales verursachen können, aber nicht *müssen.* Es treten im Signalstrom auch Signalformen auf, die in wesentlich weniger Teilimpulse zerfallen sind als dies für den größten Teil der erfassten Impulse der Fall ist.

Basierend auf dieser Beoachtung enthält das Auswertungsverfahren eine *Maximalgrößenstufe 8.13,* die die maximale zeitliche Dauer Zmax unter den Teilimpulsen am Ausgang der Detektorstufe erfasst. Dieses erfolgt mittels einer üblichen Maximumsuche: Tritt ein Impuls am Ausgang der Detektorstufe auf, dessen Dauer Z größer ist als die bisher gespeicherte maximale Dauer Zmax, dann wird die bisherige Maximaldauer Zmax durch Z ersetzt. Desweiteren werden alle Impulse gezählt, so dass bekannt ist, über wieviele Impulse die maximale zeitliche Dauer Zmax bestimmt wurde. Die Zählung und die Maximaldauer Zmax können durch ein Signal auf Null zurückgesetzt werden.

### Ablauf der Automatischen Parameterfindung

Die Maximalgrößenstufe erfasst zyklisch die maximale Dauer Zmax, die in den Impulsen am Ausgang der Detektorstufe gemessen wurde, sowie die Gesamtzahl N der Impulse. Diese Werte werden dann an die *Konfigurationsstufe* 8.15 weitergegeben. Danach wird die Maximalgrößenstufe zurückgesetzt und die Erfassung von Zmax und N beginnt erneut.

Offensichtlich ist für eine Auswertung von Zmax eine möglichst große Anzahl N zugrundeliegender Impulsdauern wünschenswert. Es ist jedoch in der praktischen Anwendung für den Benutzer nicht akzeptabel, dass bei geringen Partikelkonzentrationen die automatische Parameterfindung für lange Zeitdauern keine aktualisierten Informationen bietet. Daher beendet die Maximalgrößenstufe die Erfassung nach einer maximalen Erfassungszeit (z.B. 10s) oder wenn hinreichend viele Impulse (z.B. 10000) verarbeitet wurden.

Die Konfigurationsstufe verarbeitet die Werte weiter und ermittelt die Werte für Wmin, Wmax, G und die aktuelle Stabilität Y. Dazu werden folgende Schritte durchgeführt: Die Konfigurationsstufe besitzt eine Warteschlange (engl. FIFO), die die letzten Werte für Zmax enthält. Wird ein neuer Wert für Zmax übergeben, dann verwirft die Konfigurationsstufe den altesten Wert aus der Warteschlange und fügt den neuesten hinzu. Daneben wird der Mittelwert Za und die Standardabweichung Zs aller Werte aus der Warteschlange bestimmt. Aus dem Mittelwert Za werden dann über Tabellen oder eine Formel neue Werte für Wmin, Wmax und G bestimmt. Eine sinnvolle Implementierung ist z.B. Wmin := Za, Wmax := c * Za und G := c * Za wählen, worin c ein Faktor >= 1 ist. Bewährt hat sich für viele Anwendungen die Wahl c = 3. Der Quotient Zs/Za wird als relative Standardabweichung definiert und dient als Stabilitätskriterium S. Da entschieden werden muss, ob die Histogrammdaten eines Erfassungsvorganges gültig sind oder nicht, wird der Wert des Stabilitätskriteriums mit festen Schwellwerten verglichen. Ist der Wert des Stabilitätskriteriums größer als ein vorgegebener Vergleichswert, dann können die Histogrammdaten als *bedingt gültig* oder *ungültig* aufgefasst werden.

## Patentansprüche

1. Verfahren zur Auswertung des Signals des Lichtdetektors in einem FBRM- Messgerät, welches arbeitenden Scanner mit Single-Mode-Lichtwellenleitern und mit einer Grössenbestimmungsstufe (8.8) ausgestattet ist, wobei die Grössenbestimmungsstufe (8.8) die Signale am Ausgang der Detektorstufe in logische Gruppen unterteilt, wobei logische Einsen, welche wahrscheinlich zu einem Partikelsignal gehören, zusammengefasst werden und von denen, die von verschiedenen Partikeln stammen, getrennt werden, wobei die Detektorstufe zu jedem Zeitpunkt (t) zunächst das Integral (I) über das Detektorsignal im Zeitraum t-T bis t mit dem Parameter T berechnet, wobei der Wert des Integrals (I) mit einem Schwellwert (S) verglichen wird, wobei im Falle eines Wertes (X) über oder gleich dem Schwellwert (S) die Detektorstufe eine logische Eins ausgibt, wobei im Falle eines Wertes unter dem Schwellwert (S) eine logische Null ausgegeben wird, wobei das Ausgangssignal so interpretiert wird, dass bei einer logischen Eins am Ausgang der Detektorstufe im Zeitraum t-T bis t ein Partikel in der Fokuszone des Sensors erkannt wurde, und wobei das Ergebnis der Grössenbestimmung eine Sekantenlänge ist, deren Umrechnung zu Partikelgrössen durch eine mathematische Transformation mittels weiterführender Informationen in dem Messgerät oder in einem Computer erfolgt, mit folgenden verfahrensschritten:
1.1 im ersten Schritt wird auf eine Sequenz einer Mindestdauer (G) von logischen Nullen am Ausgang einer Detektorstufe gewartet;
1.2 anschließend wird auf eine logische Eins gewartet und die erste logische Eins wird als Beginn eines Partikelsignals (x) gewertet,
1.3 ein Wert (x) wird als Dauer des Partikelsignals erhöht, solange weiterhin eine logische Eins am Ausgang der Detektorstufe anliegt;
1.4 die Länge einer folgenden Sequenz von logischen Nullen wird bestimmt;
1.5 es wird mit dem schritt 1.8 fortgefahren, wenn die in 1.4 bestimmte Sequenzlänge eine vorbestimmte Zeitdauer (W) überschreitet;
1.6 die in 1.4 bestimmte Länge wird zu dem Wert (X) addiert und es wird zum Schritt 1.3 übergegangen;
1.7 die Zeitdauer (W) wird um einen Bruchteil des bisher bestimmten Wertes (X) erhöht und auf einen Maximalwert begrenzt, und es wird mit dem Schritt 1.3 fortgefahren;
1.8 der so bestimmte Wert (X) für die Dauer des Partikelsignals wird als Sekantenlänge interpretiert und an die weitere Verarbeitung weitergegeben, die Zeitdauer (W) wird wieder auf den Ausgangswert für Schritt 1.1 zurückgestellt, und es wird mit Schritt 1-1 für die weitere Verarbeitung von Impulsen fortgefahren; wobei mittels einer Schwellwertstufe und einer Detektorstufe ein Datenstrom für die verfahrensschritte 1.1 bis 1.8 bereitgestellt wird, und wobei das Verfahren
**dadurch gekennzeichnet ist dass**
das verwendete FBRM-Messgerät mit einem mit einer Scannerfrequenz arbeitenden Scanner ausgestaltet wird,
die Schwellwertstufe einen Tiefpassfilter umfasst, dessen Grenzfrequenz an die Scannerfrequenz angepasst wird,
die Schwellwertstufe eine Hysterese in Abhängigkeit des Ausgangswertes der Detektorstufe berücksichtigt, und
die Detektorstufe das über ein Zeitintervall (T) integrierte Detektorausgangssignal mit dem Schwellwert aus der Schwellwertstufe vergleicht.

2. Verfahren nach Anspruch 1, **dadurch gekennzeichnet, dass**
2.1 die steuernden Parameter Wmin und Wmax für eine bestimmte Anwendung fest eingestellt werden, oder
2.2 mittels einer Formel aus der Konzentration der zumessenden Substanz im umgebenden Medium eingestellt werden, oder
2.3 mittels einer tabellenähnlichen Einrichtung in Abhängigkeit von der Konzentration aus 2.2 geeignet eingestellt werden.

3. Verfahren nach Anspruch 1, **dadurch gekennzeichnet, dass**
3.1 das Maximum der im Schritt 1.7 berechneten Werte für W, die innerhalb eines Zeitintervalls angenommen wurden, erfasst wird und für weitere Auswertungen zur Verfügung steht.

4. Verfahren nach Anspruch 1, **dadurch gekennzeichnet, dass** 4.1 ein Parameter P als Mittelwert aus dem Ausgangssignal der Detektorstufe bestimmt wird und als Messwert für die Konzentration in den Ansprüchen 2.2 und 2.3 benutzt wird.

5. Verfahren nach Anspruch 1, **dadurch gekennzeichnet, dass**
5.1 der Parameter P benutzt wird, um zu überwachen, ob das Messgerät, welches das Verfahren nach Anspruch 1. benutzt, innerhalb des zulässigen Konzentrationsbereiches betrieben wird.

6. Verfahren nach Anspruch 1, **dadurch gekennzeichnet, dass**
6.1 das Zeitintervall T in Abhängigkeit von den im Verfahrensschritt 1.7 erreichten Werten für W vergrößert werden kann, um die Empfindlichkeit des Detektionsprozesses zu steigern.

7. Verfahren nach Anspruch 1, **dadurch gekennzeichnet, dass**
7.1 für die Steuerung des Verfahrens nach Anspruch 1. in einer tabellenähnlichen Einrichtung ("Applikationsdatenbank") die Parameter für T, Wmin, Wmax, C und G bezogen auf Anwendungsfälle des Messgerätes, dass das Verfahren nach Anspruch 1. einsetzt, abgelegt werden und ausgewählt werden können.

8. Verfahrens nach Anspruch 1, dadurch gekenntzeichnet, dass
8.1 mittels der Erfassung der maximalen Zeitdauer Zmax aus den zusamtrtenhängenden Impulsen im Signalstrom sowie der Gesamtzahl N der Impulse über die dieses Maximum bestimmt wurde, geeignete Parameter für Wmin, Wmax und G bestimmt und für das verfahren nach Anspruch 1. bereit gestellt werden.

9. Verfahren nach Anspruch 1, dadurch gekenntzeichnet, dass
9. für die Bestimmung der Parameter Wmin, Wmax und G eine Warteschlange (FIFO) mit mehreren Werten von Zmax verwendet wird.

10. Verfahren nach Anspruch 1, **dadurch gekennzeichnet, dass**
10.1 die Erfassungszyklen der maximalen Impulsdauer Zmax beendet werden, wenn eine Mindestanzahl N Impulse ausgewertet wurden oder eine maximale Zyklusdauer verstrichen ist.

11. Verfahren nach Anspruch 1, **dadurch gekennzeichnet, dass**
11.1 über die Werte in der Warteschlange mit den Werten von Zmax der Mittelwert Za und die Standardabweichung Zs bestimmt werden.

12. Verfahren nach Anspruch 1, **dadurch gekennzeichnet, dass**
12.1 die relative Standardabweichung zs/za der Werte Zmax in der Warteschlange als Kriterium für die Stabilität (Y) der Parameter Wmin, Wmax und G und damit für die Zuverlässigkeit des Messergebnisses herangezogen wird.

## Claims

1. Method for evaluating the signal of the light detector in a FBRM measuring device, which is equipped with single mode optical waveguides and with a size determination stage (8.8), wherein the size determination stage (8.8) divides the signals at the output of the detector stage into logical groups, wherein logical ones, which probably belong to a particle signal, are combined and are separated from those, which originate from different particles, wherein the detector stage at each time (t) firstly calculates the integral (I) by means of the detector signal in the time period t-T to t with the parameter T, wherein the value of the integral (I) is compared with a threshold value (S), wherein in the case of a value (X) above or equal to the threshold value (S), the detector stage outputs a logical one, wherein in the case of a value below the threshold value (S), a logical zero is output, wherein the output signal is interpreted in such a way that with a logical one at the output of the detector stage in the time period t-T to t, a particle was recognised in the focus zone of the sensor, and wherein the result of the size determination is a secant length, the conversion of which into particle sizes takes place by means of a mathematical transformation by means of information which leads further in the measuring device or in a computer, comprising the following method steps:
1.1 in the first step, a sequence of a minimum period (G) of logical zeros at the output of a detector stage is awaited;
1.2 a logical one is then awaited and the first logical one is evaluated as the beginning of a particle signal (x);
1.3 a value (X) is increased as the period of the particle signal for as long as a logical one continues to be present at the output of the detector stage;
1.4 the length of a following sequence of logical zeros is determined;
1.5 step 1.8 is continued with if the sequence length determined in 1.4 exceeds a predetermined time period (W);
1.6 the length determined in 1.4 is added to the value (X) and a transfer is made to step 1.3;
1.7 the time period (W) is increased by a fraction of the previously determined value (X) and limited to a maximum value, and step 1.3 is continued with;
1.8 the value (X) thus determined for the period of the particle signal is interpreted as a secant length and passed for further processing, the time period (W) is reset to the starting value for step 1.1, and step 1.1 is continued with for further processing of pulses, wherein a data stream is provided by means of a threshold value stage and a detector stage for the method steps 1.1 to 1.8 and wherein the method is **characterised in that**
the FBRM measuring device used is equipped with a scanner working at a scanner frequency,
the threshold value stage comprises a low-pass filter, the limit frequency of which is adapted to the scanner frequency, the threshold value stage takes into account a hysteresis depending on the output value of the detector stage, and
the detector stage compares the detector output signal integrated over a time interval (T) with the threshold value from the threshold value stage.

2. Method according to claim 1, **characterised in that**
2.1 the controlling parameters Wmin and Wmax are rigidly adjusted for a specific application, or
2.2 are adjusted by means of a formula from the concentration of the substance to be measured in the surrounding medium, or
2.3 are suitably adjusted by means of a table-like mechanism depending on the concentration from 2.2.

3. Method according to claim 1, **characterised in that**
3.1 the maximum of the values for W calculated in step 1.7, which were adopted within a time interval, is detected and provided for further evaluations.

4. Method according to claim 1, **characterised in that**
4.1 a parameter P is determined as the mean value from the output signal of the detector stage and is used as the measured value for the concentration in claims 2.2 and 2.3.

5. Method according to claim 1, **characterised in that**
5.1 the parameter P is used to monitor whether the measuring device, which uses the method according to claim 1, is operated within the permissible concentration range.

6. Method according to claim 1, **characterised in that**
6.1 the time interval T can be increased depending on the values for W achieved in method step 1.7, in order to increase the sensitivity of the detection process.

7. Method according to claim 1, **characterised in that**
7.1 the parameters for T, Wmin, Wmax, C and G, in relation to application cases of the measuring device, which uses the method according to claim 1, can be stored in a table-like mechanism ("application database") and selected.

8. Method according to claim 1, **characterised in that**
8.1 suitable parameters for Wmin, Wmax and G are determined by means of detecting the maximum time period Zmax from the continuous pulses in the signal stream and the total number N of pulses, by means of which this maximum was determined and provided for the method according to claim 1.

9. Method according to any claim 1, **characterised in that**
9.1 a queue (FIFO) with a plurality of values of Zmax is used to determine the parameters Wmin, Wmax and G.

10. Method according to claim 1, **characterised in that**
10.1 the detection cycles of the maximum pulse period Zmax are ended when a minimum number N of pulses has been evaluated or a maximum cycle period has passed.

11. Method according to claim 1, **characterised in that**
11.1 the mean value Za and the standard deviation Zs are determined by means of the values in the queue with the values of Zmax.

12. Method according to claim 1, **characterised in that**
12.1 the relative standard deviation Zs/Za of the values Zmax in the queue is used as the criterion for the stability (Y) of the parameters Wmin, Wmax and G and therefore for the reliability of the measuring result.

## Revendications

1. Procédé d'évaluation du signal d'un détecteur de lumière dans un appareil de mesure FBRM, qui est équipé de guides d'ondes optiques monomodes et d'un étage de détermination de dimensions (8.8), dans lequel l'étage de détermination de dimensions (8.8) sépare les signaux à la sortie de l'étage de détecteur en groupes logiques, où les uns logiques, qui appartiennent vraisemblablement à un signal de particule, sont réunis et sont séparés de ceux, qui proviennent de particules différentes,
dans lequel l'étage de détecteur calcule pour chaque moment (t) d'abord l'intégrale (I) sur le signal de détecteur dans l'intervalle t-T jusqu'à t avec le paramètre T,
dans lequel la valeur de l'intégrale (I) est comparée à une valeur de seuil (S),
dans lequel, dans le cas d'une valeur (X) supérieure ou égale à la valeur de seuil (S), le résultat de l'étage de détecteur est un un logique,
dans lequel, dans le cas d'une valeur inférieure à la valeur de seuil (S), le résultat est un zéro logique,
dans lequel le signal de sortie est interprété de sorte que, dans le cas d'un un logique à la sortie de l'étage de détecteur sur l'intervalle t-T jusqu'à t, une particule est reconnue dans la zone de focalisation du capteur, et
dans lequel le résultat de la détermination de dimensions est une sécante, dont le recalcul en dimensions de particule est effectué par une transmission mathématique grâce à des informations continues dans l'appareil de mesure ou dans un ordinateur,
comportant les étapes suivantes :
1.1 au cours de la première étape, on attend une séquence d'une durée minimale (G) de zéros logiques à la sortie d'un étage de détecteur ;
1.2 ensuite on attend un un logique et le premier un logique est estimé comme début d'un signal de particule (x) ;
1.3 une valeur (X) est élevée en tant que durée du signal de particule, tant qu'un un logique se trouve en outre à la sortie de l'étage de détecteur ;
1.4 la longueur d'une séquence suivante de zéros logiques est déterminée ;
1.5 on passe à l'étape 1.8 lorsque la longueur de séquence déterminée au cours de l'étape 1.4 dépasse une durée prédéterminée (W) ;
1.6 la longueur déterminée au cours de l'étape 1.4 est additionnée à la valeur (X) et on passe à l'étape 1.3 ;
1.7 la durée (W) est élevée d'une fraction de la valeur (X) jusqu'ici déterminée et limitée à une valeur maximale, et on passe à l'étape 1.3 ;
1.8 la valeur (X) ainsi déterminée pour la durée du signal de particule est interprétée en tant que longueur de sécante et transmise à un autre traitement, la durée (W) est de nouveau ramenée à la valeur de sortie pour l'étape 1.1, et on passe à l'étape 1.1 pour le traitement suivant des impulsions ;
dans lequel un flux de données pour les étapes de procédé 1.1 à 1.8 est déterminé grâce à un étage de valeur de seuil et un étage de détecteur, et dans lequel le procédé est **caractérisé en ce que**
l'appareil de mesure FBRM est équipé d'un scanner fonctionnant à une fréquence de scanner,
l'étage de valeur de seuil comporte un filtre passe-bas, dont la fréquence limite est adaptée à la fréquence de scanner,
l'étage de valeur de seuil prend en compte un hystérésis conformément à la valeur de sortie de l'étage de détecteur, et
l'étage de détecteur compare le signal de sortie de détecteur intégré sur un intervalle de temps (T) à la valeur de seuil provenant de l'étage de valeur de seuil.

2. Procédé selon la revendication 1, **caractérisé en ce que**
2.1 les paramètres de commande Wmin et Wmax pour une utilisation déterminée sont réglés comme étant fixes, ou
2.2 ils sont réglés dans un milieu environnant grâce à une formule concernant la concentration de la substance à mesurer, ou
2.3 ils sont réglés de façon appropriée conformément à la concentration selon l'étape 2.2 grâce à une installation tabellaire.

3. Procédé selon la revendication 1, **caractérisé en ce que**
3.1 le maximum des valeurs calculées au cours de l'étape 1.7 pour W, qui sont adoptées dans un intervalle, est détecté et est à disposition pour d'autres évaluations.

4. Procédé selon la revendication 1, **caractérisé en ce que**
4.1 un paramètre P est déterminé comme valeur moyenne à partir du signal de sortie de l'étage de détecteur et est utilisé en tant que valeur de mesure pour la concentration dans les revendications 2.2 et 2.3.

5. Procédé selon la revendication 1, **caractérisé en ce que**
5.1 le paramètre P est utilisé pour surveiller si l'appareil de mesure, qui utilise le procédé selon la revendication 1, fonctionne à l'intérieur de la zone de concentration admissible.

6. Procédé selon la revendication 1, **caractérisé en ce que**
6.1 l'intervalle de temps T peut être élargi conformément aux valeurs pour W obtenues au cours de l'étape de procédé 1.7, afin d'augmenter la sensibilité du processus de détection.

7. Procédé selon la revendication 1, **caractérisé en ce que**
7.1 pour la commande du procédé selon la revendication 1 dans une installation tabellaire ("banque de données d'application"), les paramètres pour T, Wmin, Wmax, C et G concernant les cas d'utilisation de l'appareil de mesure, qui utilise le procédé selon la revendication 1, peuvent être mémorisés et sélectionnés.

8. Procédé selon la revendication 1, **caractérisé en ce que**
8.1 les paramètres appropriés pour Wmin, Wmax et G sont déterminés et délivrés pour le procédé selon la revendication 1 grâce à la détection de la durée maximale Zmax à partir des impulsions continues dans le flux de signal et du nombre total N d'impulsions, à partir desquelles ce maximum est déterminé.

9. Procédé selon la revendication 1, **caractérisé en ce que**
9.1 une file d'attente (FIFO) un est utilisé avec plusieurs valeurs de Zmax pour la détermination des paramètres Wmin, Wmax et G.

10. Procédé selon la revendication 1, **caractérisé en ce que**
10.1 les cycles de détection de la durée d'impulsion maximale Zmax sont terminés, lorsqu'un nombre minimum N d'impulsions N est évalué ou qu'une durée de cycle maximal s'est écoulée.

11. Procédé selon la revendication 1, **caractérisé en ce que**
11.1 la valeur moyenne Za et l'écart-type Zs sont déterminés grâce aux valeurs dans la file d'attente avec les valeurs de Zmax.

12. Procédé selon la revendication 1, **caractérisé en ce que**
12.1 l'écart-type relatif Zs/Za des valeurs Zmax dans la file d'attente est utilisé en tant que critère pour la stabilité (Y) des paramètres Wmin, Wmax et G et ainsi pour la fiabilité des résultats de mesure.
